(19) Europäisches Patentamt
European Patent Office
Office européen des brevets

(11) **EP 3 598 172 A1**

(12) **EUROPÄISCHE PATENTANMELDUNG**

(43) Veröffentlichungstag:
**22.01.2020 Patentblatt 2020/04**

(51) Int Cl.:
*G01S 15/93* (2020.01)      *G01S 15/10* (2006.01)
*G01S 15/34* (2006.01)      *G01S 15/58* (2006.01)

(21) Anmeldenummer: **19183586.7**

(22) Anmeldetag: **01.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.07.2018 DE 102018212061**

(71) Anmelder: **Robert Bosch GmbH**
**70442 Stuttgart (DE)**

(72) Erfinder: **Weissenmayer, Simon**
**74223 Flein (DE)**

(54) **VERFAHREN ZUM BETREIBEN EINES ULTRASCHALLSENSORS, ULTRASCHALLSENSOR UND FORTBEWEGUNGSMITTEL**

(57)    Die vorliegende Erfindung betrifft ein Verfahren zum Betreiben eines Ultraschallsensors umfassend die Schritte:

• Senden eines Ultraschallsignals (9),
wobei während des Sendens eine Ultraschallfrequenz (f) des Ultraschallsignals (9) variiert wird,
wobei die Ultraschallfrequenz (f) mindestens von einem ersten Wert (1) über einen zweiten Wert (2) auf einen dritten Wert (3) variiert und gesendet wird, und während des Variierens zwischen dem ersten und dem zweiten Wert (1, 2) und zwischen dem zweiten und dem dritten Wert (2, 3) eine Eigenfrequenz (7) des Ultraschallsensors je einmal durchlaufen und gesendet wird,

und die Eigenfrequenz (7) jeweils zwischen dem ersten Wert (1) und dem zweiten Wert (2) sowie dem zweiten Wert (2) und dem dritten Wert (3) liegt; im Ansprechen darauf

• Empfangen eines Echos (11) des ausgesendeten Ultraschallsignals (9); und
• Ermitteln einer Ultraschallfrequenzverschiebung in Abhängigkeit einer zeitlichen Differenz von Signalanteilen des Ultraschallsignals (9) mit Eigenfrequenz (7) und/oder mit der Zwischenfrequenz des Ultraschallsignals (9) und einer zeitlichen Differenz von Signalanteilen des Echos (11) mit Eigenfrequenz (7) und/oder der Zwischenfrequenz des Echos (11).

## Fig. 1

**Beschreibung**

Die vorliegende Erfindung betrifft ein Verfahren zum Betreiben eines Ultraschallsensors, einen Ultraschallsensor und ein Fortbewegungsmittel.

Stand der Technik

Bei derzeit bekannten Ultraschallsensoren ist der Dopplereffekt ein nachteiliges Phänomen. Hohe Relativgeschwindigkeiten (beispielsweise > 5 km/h) können hierbei zu hohen Ultraschallfrequenzverschiebungen führen, weshalb einerseits breitere Eingangsfilter verwendet werden müssen, die zu einem höheren Eintrag von Störgeräuschen führen. Andererseits wird der Sensor beim Empfang der dopplerverschobenen Echo-Signale nicht mehr mit der Eingangsfrequenz bzw. Eigenfrequenz angeregt, was eine höhere Dämpfung bei der Umwandlung des Ultraschallsignals bewirkt. Um dem Dopplereffekt und der damit verbundenen erhöhten Dämpfung entgegenzuwirken, werden die Ultraschallsignale bei Ultraschallsensoren beispielsweise codiert. Dies bedeutet, dass die Frequenz bei einem Senden des Signals um die Eigenfrequenz herum variiert wird. Durch die Codierung des Signals kann zumindest immer ein Teil des Echo-Signals den Sensor mit seiner Eigenfrequenz anregen.

Generell lässt sich ein Winkel $\alpha$ eines stationären, mit einem Ultraschallsensor zu detektierenden Objektes zur Fahrzeuglängsachse wie folgt berechnen:

$$\alpha = \cos^{-1}\left(\frac{c}{v_v}\frac{1 - \frac{f_B}{f_S}}{1 + \frac{f_B}{f_S}}\right)$$

Hierbei sind $v_v$ die Fahrzeuggeschwindigkeit, c die Schallgeschwindigkeit, $f_S$ die Sendefrequenz und $f_B$ die Empfangsfrequenz.

Solange die Fahrzeugrelativgeschwindigkeit klein ist und der Abstand zum Objekt groß ist, ändert sich der Winkel so geringfügig, dass er in etwa als gleichbleibend angenommen werden kann. Sollte die Fahrzeugrelativgeschwindigkeit allerdings groß (z.B. > 5 km/h) sein oder der Abstand zum Objekt klein werden, ist ferner zu berücksichtigen, dass sich das Fahrzeug zwischen Senden und Empfangen bewegt und die Ultraschallsignale darum in unterschiedlichen Winkeln ausgesendet und empfangen werden. Ebenso ist es möglich, per Kreuzecho die Richtung des Objektes zu plausibilisieren. Dabei empfängt ein Sensor das Echo eines anderen Sensors. Auch hier unterscheidet sich der Winkel $\alpha_S$ des Senders zum Objekt von dem Winkel $\alpha_B$ des Empfängers zum Objekt. Die Frequenzverschiebung lässt sich wie folgt plausibilisieren:

$$f_B = f_S\frac{c - \cos(\alpha_S)v_v}{c + \cos(\alpha_B)v_v}$$

Für die Plausibilisierung muss die Position des Objekts bekannt sein, um daraus die Winkel berechnen zu können.

Alternativ können aber auch die Funktionen $\alpha_S(f_O)$ und $\alpha_B(f_O)$ aus zwei Messungen desselben Sensors oder aus zwei Messungen zweier Sensoren wie folgt berechnet werden:

$$\alpha_S = \cos^{-1}\left(\frac{c}{v_v}\left(1 - \frac{f_S}{f_O}\right)\right)$$

$$\alpha_B = \cos^{-1}\left(\frac{c}{v_v}\left(1 - \frac{f_O}{f_B}\right)\right)$$

Der Wert $f_O$ stellt dabei die Frequenz dar, die vom Objekt reflektiert wird. Durch Variation der Werte $f_O$ und die Triangulation mit Hilfe der bekannten Lageinformation des Senders und Empfängers können plausible Werte für $\alpha_{S,1/2}(f_{O,1/2})$ und $\alpha_{B,1/2}(f_{O,1/2})$ ermittelt werden. Hierüber kann das Objekt lokalisiert werden, ohne dass hierfür die Abstände zum Objekt bekannt sein müssen. Anhand der Dopplerverschiebung können auch bewegte Objekte von unbewegten Objekten unterschieden werden. Stimmt der berechnete Winkel $\alpha$ nicht mit dem Winkel, welcher über die Trilateration berechnet wurde, überein oder stimmt die berechnete Frequenz $f_B$ nicht mit der gemessenen Frequenz überein, so bewegt sich das Objekt. Dies ist eine wichtige Information, da bewegte Objekte (z.B. Fußgänger und Fahrradfahrer) besonders schutzbedürftig sind oder eine besondere Gefahr für sich und die Umgebung darstellen können (z.B. im Fall von Autos oder Schranken etc.).

DE 10 2009 029 465 A1 beschreibt ein Verfahren zur Bestimmung einer Bewegungsrichtung und einer Relativgeschwindigkeit. Hierbei können beispielsweise der Abstand und die Richtung eines Objektes von einem Fahrzeug bei einem Einparkvorgang mithilfe von mehreren Ultraschallsensoren anhand des Dopplereffekts bestimmt werden. Der Abstand wird hierbei mittels Trilateration bestimmt. Weiterhin kann durch die Sensoren mithilfe einer Triangulation ein Winkel zu einem sich relativ bewegenden Objekt bestimmt werden.

DE 10 2004 005 421 A1 betrifft ein Verfahren und eine Einrichtung zur Überwachung einer Umgebung eines Kraftfahrzeugs. Hierbei wird ausgehend von einem Bezugskraftfahrzeug ein weiteres, sich relativ dazu bewegendes, Kraftfahrzeug durch Ultraschallsensoren mithilfe des Dopplereffekts detektiert. Dabei können mithilfe von Triangulation der Winkel und der Abstand des anderen Fahrzeuges bestimmt werden.

## Offenbarung der Erfindung

Gemäß einem ersten Aspekt betrifft die Erfindung ein Verfahren zum Betreiben eines Ultraschallsensors. Insbesondere umfasst das Betreiben eine Codierung eines Ultraschallsignals. Hierbei kann ein solcher Ultraschallsensor sowohl in mobilen Vorrichtungen, wie etwa in Fortbewegungsmitteln, als auch in immobilen Vorrichtungen installiert sein. Das erfindungsgemäße Verfahren umfasst in einem ersten Schritt ein Senden eines Ultraschallsignals. Das Ultraschallsignal kann beispielsweise eine Zeitdauer von ≤ 2 ms aufweisen. Während des Sendens findet eine Variation der Ultraschallfrequenz von einem ersten Wert auf einen zweiten Wert statt. Die Variation setzt sich von einem zweiten Wert auf einen dritten Wert fort. Hierbei liegt die Eigenfrequenz und/oder eine Zwischenfrequenz des Ultraschallsensors jeweils zwischen dem ersten und dem zweiten Wert und zwischen dem zweiten und dem dritten Wert. Hierbei unterscheidet sich die Zwischenfrequenz insbesondere durch ihren Frequenzwert von der Eigenfrequenz. Somit kann der zweite Wert ein Extrempunkt des Frequenzverlaufs sein. Zudem ist sichergestellt, dass die Eigenfrequenz bzw. die Zwischenfrequenz ebenfalls mit dem Signal gesendet wird bzw. in dem Frequenzverlauf des Signals vorhanden ist. Die "Eigenfrequenz" eines schwingfähigen Systems, im vorliegenden Fall eines Ultraschallsensors, ist eine Frequenz, mit der das System nach einmaliger Anregung als Schwingungsmode schwingen kann. Unter "Ultraschallfrequenz" können vorliegend Frequenzen im Bereich zwischen 15 kHz und 1 GHz verstanden werden. Mit anderen Worten wird innerhalb eines Ultraschallsignals, welches hierbei eine zeitliche Abfolge unterschiedlicher Ultraschallfrequenzen umfasst, eine Ultraschallfrequenzabfolge erzeugt, welche zwischen einem ersten Wert (z.B. 40 kHz) und einem zweiten Wert (z.B. 60 kHz) liegt. Die Eigenfrequenz (z.B. 48 kHz) bzw. Zwischenfrequenz (z.B. ≠ 48 kHz) wird hierbei ein erstes Mal durchlaufen. Anschließend wird von einem zweiten Wert (z.B. 60 kHz) auf einen dritten Wert (z.B. ebenfalls 40 kHz) variiert. Hierbei wird die Eigenfrequenz (z.B. 48 kHz) bzw. die Zwischenfrequenz ein zweites Mal durchlaufen. Hierbei kann die Variation diskontinuierlich, also insbesondere sprunghaft zwischen den Werten, oder kontinuierlich zwischen den genannten Werten variiert werden, solange die Variation das Senden des ersten, zweiten und dritten Wertes und das je einmalige Senden der Eigenfrequenz zwischen dem ersten und zweiten Wert sowie dem zweiten und dritten Wert umfasst. Hierbei können die ersten und dritten Werte beispielsweise niedriger als der zweite Wert sein. Dies bedeutet, dass die Ultraschallfrequenz zunächst erhöht und ab dem zweiten Wert, der als ein Extrempunkt verstanden werden kann, verringert wird. Im anderen Fall können der erste und der dritte Wert höher sein als der zweite Wert. In diesem Fall kann die Ultraschallfrequenz zunächst verringert werden und ab dem zweiten, extrempunktartigen Wert wieder erhöht werden. Wichtig ist in beiden Fällen, dass die Eigenfrequenz bzw. Zwischenfrequenz mindestens je einmal zwischen dem ersten und dem zweiten Wert und dem zweiten und dem dritten Wert gesendet wird. Mit anderen Worten entspricht dies der Abfolge "erster Wert" - "Eigenfrequenz" - "zweiter Wert" - "Eigenfrequenz" - "dritter Wert". Das Variieren der Ultraschallfrequenz kann über das Ansteuern eines Piezoaktors des Ultraschallsensors mittels einer Auswerteeinheit, z.B. einer CPU und/oder eines Mikrocontrollers, erfolgen. Das Senden des Signals kann über bekannte Ultraschallmembranen erfolgen. Im Ansprechen auf das Senden erfolgt ein Empfangen eines Echos des gesendeten Ultraschallsignals, welches beispielsweise durch eine Reflektion des Ultraschallsignals an einem Objekt stammt. Hierbei ist es, wie in der Folge deutlich wird, unkritisch, ob sich das Objekt bewegt oder ob das Objekt statisch ist bzw. ob sich der Ultraschallsensor bewegt oder der Ultraschallsensor statisch ist. Hierbei wird mit anderen Worten eine zeitliche Variation des Echosignals bzw. des Echos empfangen, welches dem gesendeten Signal unter Einfluss einer Ultraschallfrequenzverschiebung entspricht. Das Echo kann hierbei über einen im Stand der Technik bekannten Ultraschallempfänger, insbesondere mittels des Ultraschallsensors empfangen werden. Nachdem das Echo empfangen wurde, erfolgt eine Ermittlung der Ultraschallfrequenzverschiebung. Dies kann beispielsweise mithilfe der vorstehend beschriebenen Auswerteeinheit erfolgen. Hierbei kann insbesondere zunächst ein Zeitpunkt im Frequenzverlauf des Echosignals und des Sendesignals ermittelt werden, an dem die Eigenfrequenz und/oder Zwischenfrequenz das erste Mal (bzw. weitere Male) durchlaufen wird. Im Zuge dessen kann eine zeitliche Differenz insbesondere zwischen dem Zeitpunkt, an dem die Eigenfrequenz und/oder die Zwischenfrequenz im Frequenzverlauf des Sendesignals das erste Mal (bzw. weitere Male) durchlaufen wird und dem Zeitpunkt, an dem die Eigenfrequenz und/oder die Zwischenfrequenz im Frequenzverlauf des Echosignals das erste Mal (bzw. weitere Male) durchlaufen wird, ermittelt werden. Die Ermittlung der Ultraschallfrequenzverschiebung erfolgt in Abhängigkeit einer zeitlichen Differenz von Signalanteilen des Ultraschallsignals mit Eigenfrequenz und/oder mit der Zwischenfrequenz und der zeitlichen Differenz von Signalanteilen des Echos mit Eigenfrequenz und/oder mit der Zwischenfrequenz des Echos. Wenn, abweichend von einer Eigenfrequenz des Sensors, eine Zwischenfrequenz durchlaufen wird, kann die Frequenzverschiebung von nahen und großen Objekten nach wie vor besonders gut detektiert werden. Die Genauigkeit der Berechnung kann insbesondere erhöht werden, indem beim Empfang mehr als eine Zwischenfrequenz und/oder mehr als eine Eigenfrequenz durchlaufen bzw. ausgewertet wird und ein Median- und/oder Mittelwert aus den unabhängig voneinander berechneten Frequenzverschiebungen berechnet wird.

Mithilfe der erfindungsgemäß ermittelten Ultraschallfrequenzverschiebung kann ein Winkel, aus welchem das Echo stammt bezüglich der Fortbewegungsmittellängsachse sowie die Information, dass sich ein Objekt bewegt, erhalten werden. Insbesondere hat das erfindungsgemäße Verfahren hierbei Vorteile bei der Positions- oder Bewegungsbestimmung eines Objektes bei hoher Geschwindigkeit, wenn ein Ultraschallsensor in einem erweiterten Frequenzbereich von 30 kHz bis 80 kHz betrieben wird, während herkömmliche Verfahren lediglich sinnvolle Messungen bei niedrigen Geschwindigkeiten durch einen Betrieb in einem Frequenzbereich zwischen 40 kHz und 60 kHz ermöglichen. Zwar ist ein Betrieb im Frequenzbereich zwischen 30 kHz und 80 kHz bei bekannten Sensoren prinzipiell möglich, allerdings werden die Echos nur im selben eingeschränkten Frequenzspektrum ausgewertet, in dem die Signale gesendet werden. Über das erfindungsgemäße Verfahren können nützliche Informationen u.a. wie in der Folge beschrieben gewonnen werden. Bei einem Betrieb des Ultraschallsensors über das erfindungsgemäße Verfahren in einem besonders niedrigen Frequenzbereich bis zu einem Minimalwert von 30 kHz kann der Ultraschallsensor eine sehr hohe Reichweite von beispielsweise 20 m aufweisen, weil niedrige Frequenzen schwächer über die Strecke gedämpft werden als hohe Frequenzen. Überdies werden die Frequenzen von sehr schnell auf den Sensor zu bewegten Objekten nach oben in Richtung einer besseren Empfangsempfindlichkeit verschoben. Dadurch können durch den Ultraschallsensor auch Objekte mit Geschwindigkeiten von zum Beispiel v = 60 km/h (das entspricht der Geschwindigkeit eines PKWs mit 100 km/h unter einem Detektionswinkel von 45°) bei einem Empfangen und Auswerten von Ultraschallfrequenzen detektiert werden. Bei einem Sendefrequenzspektrum von $f_S$ = 30 kHz bis 40 kHz kann bei dieser Differenzgeschwindigkeit und der Schallgeschwindigkeit c = 340 m/s das Empfangsfrequenzspektrum $f_B$ bei

$$f_B = f_S \cdot \frac{1 + \frac{v_B}{c}}{1 - \frac{v_S}{c}} = f_S \cdot \frac{c + v_B}{c - v_S}$$

$f_B$ = 35 kHz bis 45 kHz liegen. Beim Empfang kann in diesem Beispiel das Signal bei einer Gesamtdauer von 2 ms die Eigenfrequenz von 48 kHz nicht erreichen, dennoch kann durch eine virtuelle Verlängerung der Flanken des Frequenzverlaufs über die Zeit bis zur Eigenfrequenz ein Abstand t4 - t1 von ca. -0,6 ms berechnet werden. Beim Senden wird die Eigenfrequenz insbesondere ebenfalls nicht durchlaufen, es kann aber dennoch nach obiger Vorgehensweise der Abstand t4 - t1 aus der virtuellen Verlängerung der ansteigenden bzw. abfallenden Flanke bis zur Eigenfrequenz zu t3 - t2 = -1,6 ms berechnet werden. Die zeitliche Differenz der beiden Durchläufe kann also (t4 - t1) - (t3 - t2) = 1 ms betragen. Die gleiche zeitliche Differenz lässt sich z.B berechnen, wenn der Durchlauf der Frequenz 38 kHz gemessen wird. Mit t4 - t1 = 1,4 ms und t3 - t2 = 0,4 ms berechnet sich die Differenz ebenso zu (t4 - t1) - (t3 - t2)= 1 ms. Überdies ist eine präzisere Plausibilisierung des Abstandes und der Bewegung eines anderen Objektes möglich.

Die Unteransprüche zeigen bevorzugte Weiterbildungen der Erfindung.

In einer vorteilhaften Weiterbildung umfasst das erfindungsgemäße Verfahren ferner einen Schritt eines Ermittelns eines Winkels, aus welchem das Echo bezüglich der Längsachse des Fortbewegungsmittels stammt, und/oder einer Entfernung und/oder eines Vorhandenseins einer Bewegung eines Objektes, von welchem das Echo stammt. Diese Berechnung kann ebenfalls über eine Auswerteeinheit, z.B. in Abhängigkeit der eingangs diskutierten Formeln, berechnet werden. Innerhalb dieses Schrittes werden die o.g. Observablen (Winkel und/oder Entfernung und/oder Vorhandensein einer Bewegung eines Objektes) in Abhängigkeit der Ultraschallfrequenzverschiebung korrespondierender Eigenfrequenzen ermittelt. "Korrespondierende Eigenfrequenzen" sind hierbei die Eigenfrequenzen eines Signals und des zum Signal zeitlich verschobenen reflektierten Echos unter Einfluss der Ultraschallfrequenzverschiebung. Insofern, als eine Ultraschallfrequenzverschiebung ausgewertet wird, kann die jeweilige Observable präziser bestimmt werden, da etwaige Bewegungen des Objektes durch etwaige Unterschiede der beiden Ultraschallfrequenzverschiebungen berücksichtigt werden.

In einer anderen vorteilhaften Weiterbildung des erfindungsgemäßen Verfahrens sind der erste und der dritte Wert identisch. Beispielsweise können die identischen Werte ganzzahlige Vielfache von 1 kHz im Bereich von 30 bis 40 kHz oder 60 bis 80 kHz betragen. Innerhalb dieser Weiterbildung können die ersten und zweiten Werte also entweder Minimalwerte oder Maximalwerte darstellen.

In einer bevorzugten Weiterbildung ist sind der erste und der dritte Wert jeweils ein Maximalwert des Ultraschallfrequenzverlaufes. In diesem Fall erfolgt zunächst ein Verringern der Ultraschallfrequenz unter einem erstmaligen Durchlauf und Senden der Eigenfrequenz und bei Erreichen des zweiten Wertes, welcher insbesondere ein Minimalwert ist, ein Erhöhen der Ultraschallfrequenz unter einem zweiten Durchlaufen der Eigenfrequenz auf den dritten Wert.

In einer anderen bevorzugten Weiterbildung sind der erste und der dritte Wert Minimalwerte des Ultraschallfrequenzverlaufes. Hierbei ist der zweite Wert insbesondere ein Maximalwert. Der Verlauf der Frequenzvariation ist umgekehrt zum Verlauf der im vorstehenden Absatz beschriebenen Weiterbildung. Zunächst wird die Ultraschallfrequenz von einem ersten Wert auf einen zweiten Wert erhöht, wobei die Eigenfrequenz, welche gesendet wird, zwischen diesen Werten durchlaufen wird. Anschließend wird ab Erreichen des zweiten Wertes die Ultraschallfrequenz verringert, während die Eigenfrequenz ein zweites Mal durchlaufen und gesendet wird, bis der dritte Wert erreicht ist.

In einer weiteren bevorzugten Ausgestaltung des erfindungsgemäßen Verfahrens wird insbesondere eine zeitliche Differenz von Signalanteilen mit Eigenfrequenz und/oder von Signalanteilen mit der Zwischenfrequenz innerhalb des Ultraschallsignals ermittelt. Ferner wird eine zeitliche Differenz von Signalanteilen mit Eigenfrequenz und/oder von Signalanteilen mit der Zwischenfrequenz innerhalb des Echos ermittelt. Durch einen Vergleich der ermittelten zeitlichen Differenz innerhalb des Ultraschallsignals mit der ermittelten zeitlichen Differenz innerhalb des Echos kann die Ultraschallfrequenzverschiebung ermittelt werden.

In einer weiteren Ausgestaltung des erfindungsgemäßen Verfahrens wird das Variieren der Frequenz innerhalb des Ultraschallsignals mindestens einmal wiederholt. Dies bedeutet, dass die Ultraschallfrequenz insbesondere von dem dritten Wert auf einen vierten Wert variiert wird, wobei der vierte Wert insbesondere dem zweiten Wert entspricht, und dabei die Eigenfrequenz des Ultraschallsensors einmal durchlaufen und von einem vierten Wert auf einen fünften Wert variiert wird, während zwischen dem vierten und dem fünften Wert die Eigenfrequenz ebenfalls durchlaufen wird. Hierdurch kann eine Ultraschallmessung bezüglich der vorstehend genannten Observablen weiter präzisiert werden. Der vorbeschriebene Verlauf kann beliebig oft wiederholt werden.

Darüber hinaus kann gemäß einer zum vorstehenden Absatz bevorzugten Weiterbildung ein weiterer Schritt des Filterns basierend auf einer Wiederholung des Variierens innerhalb des Signals bzw. des Echos erfolgen. Hierbei können Störgeräusche aufgrund der charakteristischen Wiederholung des Eigenfrequenzechos, welches beispielsweise viermal den Ultraschallsensor erreicht (d.h. wenn die Variation der Frequenz einmal wiederholt wird) herausgefiltert werden.

In einer bevorzugten Weiterbildung kann ein Verlauf der Variation der Ultraschallfrequenz bei einer mehrfachen Wiederholung über eine Zeit einem Sägezahnmuster und/oder einer Sinuskurve und/oder einer Kombination aus Tangens- und Cotangensfunktionen entsprechen. Wenn der Ultraschallsensor über mehrere Sender verfügt, ist hierbei auch eine Signalüberlagerung beim Sendevorgang möglich.

Beispielsweise können der erste und dritte Wert zu 45 kHz und der zweite Wert zu 55 kHz gewählt werden. Die Frequenz vom ersten zum zweiten Wert kann linear innerhalb von 1 ms durchlaufen werden. Gleiches kann für den weiteren Verlauf vom zweiten zum dritten Wert gelten. Dabei kann zwei Mal die Eigenfrequenz von 48 kHz durchlaufen werden. In diesem Fall beträgt der Frequenzanstieg z.B. (54 kHz - 44 kHz)/1 ms = 10 kHz/ms. Beim Senden wird insbesondere zu den Zeiten $t2 = 0,4$ ms und $t3 = 1,6$ ms die Eigenfrequenz durchlaufen. Wenn die Frequenz z.B. durch den Dopplereffekt um 1 kHz nach oben verschoben wird, dann wird insbesondere unter Vernachlässigung, dass die Gesamtdauer des Empfangssignals um ca. 2% kürzer ist, die Eigenfrequenz zu den Zeiten $t1 = 0,3$ ms und $t4 = 1,7$ ms durchlaufen. Die zeitliche Differenz der beiden Durchläufe kann also $(t4 - t1) - (t3 - t2) = 0,2$ ms betragen.

Die folgenden erfindungsgemäßen Aspekte umfassen die vorteilhaften Ausgestaltungen und Weiterbildungen mit den wie vorstehend genannten technischen Merkmalen sowie die generellen Vorteile des erfindungsgemäßen Verfahrens und die jeweils damit verbundenen technischen Effekte gleichsam. Zur Vermeidung von Wiederholungen wird deshalb in der Folge auf eine erneute Aufzählung verzichtet.

Gemäß einem zweiten Aspekt betrifft die vorliegende Erfindung einen Ultraschallsensor, welcher eingerichtet ist, ein Verfahren gemäß dem ersten Erfindungsaspekt durchzuführen. Hierbei kann der Ultraschallsensor einen Ultraschallsender und einen Ultraschallempfänger und/oder einen Ultraschallsenderempfänger umfassen. Der Ultraschallsensor kann eine Auswerteeinheit umfassen, die eingerichtet ist, die Verfahrensschritte gemäß dem ersten Erfindungsaspekt durch den Ultraschallsensor durchführen zu lassen. Ein vordefinierter Ablauf der Verfahrensschritte kann auf einem Speicher des Sensors hinterlegt sein.

Gemäß einem dritten Aspekt betrifft die vorliegende Erfindung ein Fortbewegungsmittel, welches einen Ultraschallsensor gemäß dem dritten Erfindungsaspekt umfasst.

Als Fortbewegungsmittel im Sinne der Erfindung kommen zum Beispiel Automobile, insbesondere PKW und/oder LKW, und/oder Flugzeuge und/oder Schiffe und/oder Motorräder infrage.

Kurze Beschreibung der Zeichnung

Nachfolgend werden Ausführungsbeispiele der Erfindung unter Bezugnahme auf die begleitende Zeichnung im Detail beschrieben. In der Zeichnung ist:

Figur 1     ein erstes Schaubild einer Ultraschallfrequenzvariation gemäß einer Ausführungsform des erfindungsgemäßen Verfahrens,

Figur 2     ein zweites Schaubild einer Ultraschallfrequenzvariation gemäß einer Ausführungsform des erfindungsgemäßen Verfahrens,

Figur 3     ein drittes Schaubild einer Ultraschallfrequenzvariation gemäß einer Ausführungsform des erfindungsgemäßen Verfahrens,

Figur 4     eine Ausführungsform eines erfindungsgemäßen Ultraschallsensors,

Figur 5     eine Ausführungsform eines erfindungsgemäßen Fortbewegungsmittels, und

Figur 6     ein Flussdiagramm einer Ausführungsform des erfindungsgemäßen Verfahrens.

Bevorzugte Ausführungsform der Erfindung

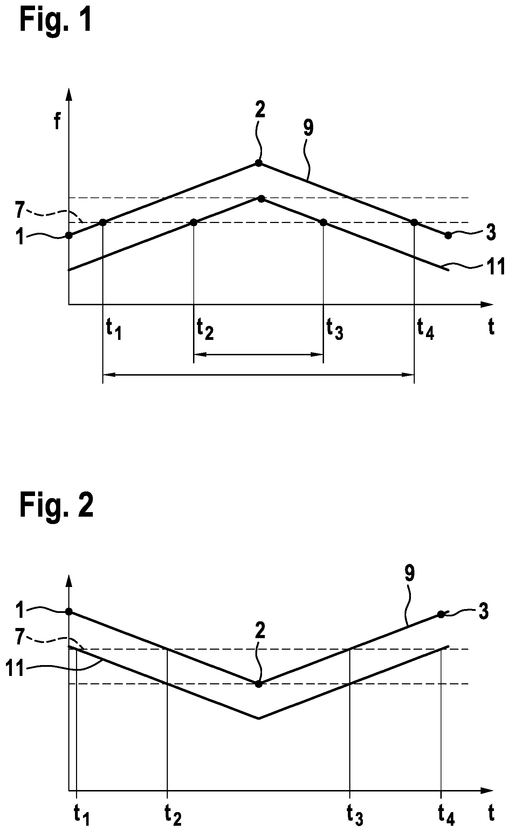

Figur 1 zeigt ein erstes Schaubild einer Ultraschallfrequenzvariation bzw. eines Ultraschallfrequenzverlaufes gemäß einem ersten Schritt einer Ausführungsform des erfindungsgemäßen Verfahrens. Hierbei ist die Ultraschallfrequenz f gegen die Zeit t aufgetragen. Ferner ist die Eigenfrequenz 7, beispielsweise 48 kHz, des Ultraschallsensors 10 als gestrichelte Linie dargestellt. Das Ultraschallsignal 9 setzt sich in diesem Fall unter anderem aus einem ersten Wert 1 und einem zweiten Wert 2 und einem dritten Wert 3 zusammen. Der Frequenzverlauf des Ultraschallechos 11 ist ebenfalls in dem Schaubild dargestellt. Die Ultraschallfrequenzvariation erfolgt vom ersten Wert 1, z.B. 45 kHz, unter einer Erhöhung auf die Eigenfrequenz 7 bis zu einer Erhöhung auf einen zweiten Wert 2, welcher z.B. 55 kHz beträgt. Der zweite Wert 2 stellt hierbei einen Maximalwert und damit einen Extremwert dar. Ab dem Erreichen des zweiten Wertes 2 erfolgt eine Verringerung der Ultraschallfrequenz innerhalb des Ultraschallsignals 9 auf einen dritten Wert 3, der z.B. 45 kHz beträgt. Eine Dauer eines Ultraschallsignals 9, innerhalb dessen die Variation der Ultraschallfrequenz f stattfindet, kann beispielsweise ≤ 2 ms (bevorzugt 1,7 ms) betragen. Zum Zeitpunkt t1 wird hierbei die Eigenfrequenz 7 des Ultraschallsignals 9 zum ersten Mal durchlaufen. Zu einem Zeitpunkt t4 wird innerhalb der Frequenzvariation die Eigenfrequenz 7 des Ultraschallsignals 9 ein zweites Mal durchlaufen. Die korrespondierende Eigenfrequenz 7 des Echos 11 wird zum Zeitpunkt t2 unter Einfluss der Ultraschallfrequenzverschiebung detektiert. Ferner wird die Eigenfrequenz zum Zeitpunkt t3 des Echos 11 durchlaufen. Durch einen Vergleich der zeitlichen Differenz (t4 -t1; symbolisiert durch den unteren Abstandspfeil) von Signalanteilen mit Eigenfrequenz 7 des Ultraschallsignals 9 mit der zeitlichen Differenz (t3 - t2; symbolisiert durch den oberen Abstandspfeil) von Signalanteilen mit Eigenfrequenz 7 des Echos 11 kann die Ultraschallfrequenzverschiebung ermittelt werden.

Figur 2 zeigt ein Schaubild, welches den umgekehrten Fall zu Figur 1 darstellt. Hierbei findet zunächst eine Verringerung der Ultraschallfrequenz f innerhalb des Ultraschallsignals 9 von einem ersten Wert 1 (z.B. 55 kHz) über die Eigenfrequenz 7 (z.B. 48 kHz) auf einen zweiten Wert 2 (z.B. 45 kHz) statt. Der zweite Wert 2 stellt zugleich einen Minimalwert und einen Extremwert dar. Ab Erreichen des zweiten Wertes 2 erfolgt ein Erhöhen der Ultraschallfrequenz f auf die Eigenfrequenz 7 des Ultraschallsensors 10 und anschließend auf den dritten Wert 3 (z.B. 55 kHz).

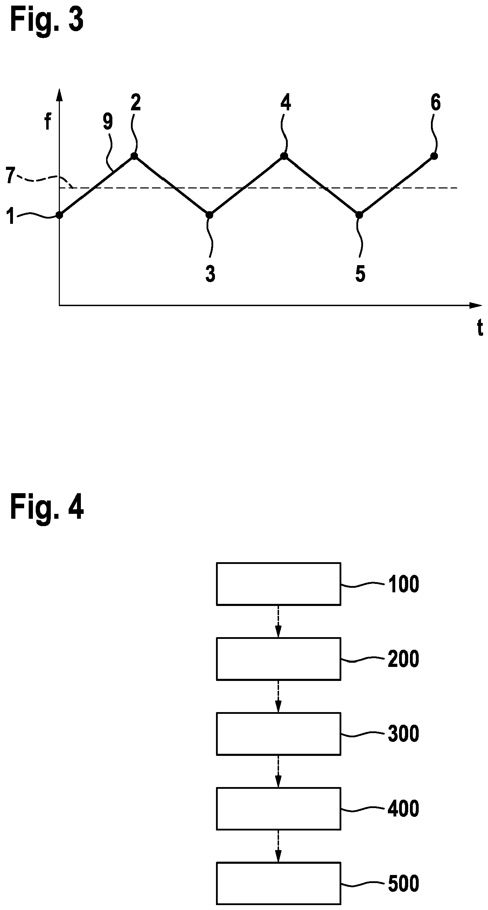

Figur 3 zeigt ein Ultraschallsignal 9 in Form eines Sägezahnmusters. Dies entspricht einer periodischen Fortsetzung bzw. Wiederholung des Verlaufs der Kurve des Ultraschallsignals 9 aus Figur 1. Hierbei wurde auf eine Darstellung des Echos 11 im Wege der Übersichtlichkeit verzichtet. Der Verlauf des Echos 11 kann allerdings ebenfalls als Sägezahnmusters als analoge Fortsetzungen zu Figur 1 betrachtet werden. Innerhalb des Schaubildes, welches Figur 3 zeigt, wird die Eigenfrequenz 7 des Ultraschallsensors 10 insgesamt fünf Mal durchlaufen. Dies erfolgt durch eine Variation der Ultraschallfrequenz f in der Abfolge: erster Wert 1 - Eigenfrequenz 7 - zweiter Wert 2 - Eigenfrequenz 7 - dritter Wert 3 - Eigenfrequenz 7 - vierter Wert 4 - Eigenfrequenz 7 - fünfter Wert 5 - Eigenfrequenz 7 - sechster Wert 6.

Figur 4 zeigt ein Flussdiagramm einer Ausführungsform eines erfindungsgemäßen Verfahrens. In einem ersten Schritt 100 erfolgt ein Senden eines Ultraschallsignals 9 in Richtung eines Objektes, beispielsweise durch einen Ultraschallsender 13a. Hierbei wird eine Ultraschallfrequenz f in der folgenden Weise variiert: erster Wert 1, z.B. 30 kHz, - Eigenfrequenz 7 des Ultraschallsensors 10, z.B. 48 kHz, - zweiter Wert 2, z.B. 80 kHz, - Eigenfrequenz 7 des Ultraschallsensors 10 - dritter Wert 3, z.B. 30 kHz, - Eigenfrequenz 7 des Ultraschallsensors 10 - vierter Wert 4, z.B. 80 kHz, - Eigenfrequenz 7 des Ultraschallsensors 10 - fünfter Wert 5, z.B. 30 kHz. Im Ansprechen darauf wird in einem zweiten Schritt 200 das entsprechende Echo 11, welches von dem Objekt reflektiert wird, beispielsweise durch einen Ultraschallempfänger 13b des Ultraschallsensors 10 empfangen. In einem dritten Schritt 300 wird das Echo 11 aufgrund der zeitlichen Abfolge der Eigenfrequenz 7 herausgefiltert. In einem vierten Schritt 400 erfolgt ein Ermitteln einer Ultraschallfrequenzverschiebung in Abhängigkeit einer zeitlichen Differenz der Durchläufe der Eigenfrequenz 7 des Ultraschallsignals 9 und der korrespondierenden Durchläufe der Eigenfrequenz 7 des Echos 11. In einem fünften Schritt 500 folgt in Abhängigkeit der ermittelten Ultraschallfrequenzverschiebung eine Ermittlung eines Winkels des Objektes, von welchem das Echo 11 stammt. Dies kann beispielsweise mittels einer Auswerteeinheit 8, beispielsweise einer CPU und/oder eines Mikrocontrollers, erfolgen.

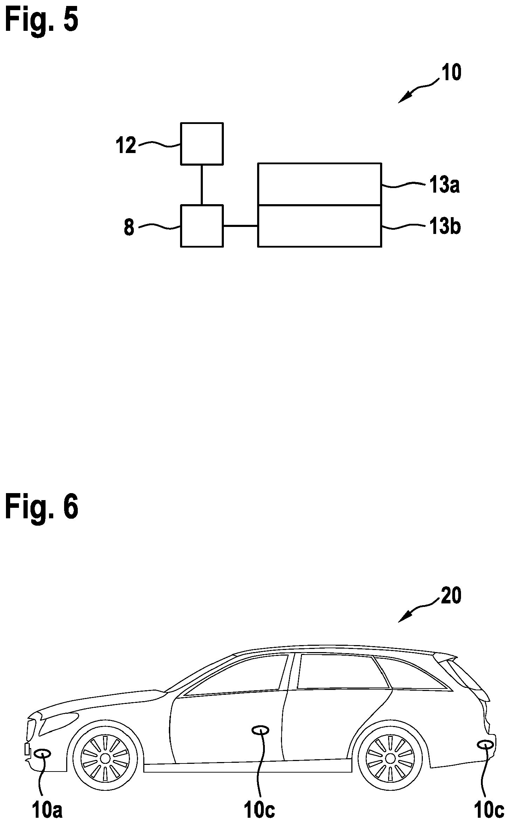

Figur 5 zeigt eine Ausführungsform eines erfindungsgemäßen Ultraschallsensors 10, welcher einen Ultraschallsender 13a und einen Ultraschallempfänger 13b umfasst. Ferner sind Ultraschallempfänger 13b und Ultraschallsender 13a jeweils mit einer Auswerteeinheit 8 verbunden. Diese kann auf einen Speicher 12 zugreifen. In dem Speicher 12 kann beispielsweise ein Protokoll zur Variation der Ultraschallfrequenz f während eines Sendens 100 eines Ultraschallsignals 9 hinterlegt sein.

Figur 6 zeigt eine Ausführungsform eines erfindungsgemäßen Fortbewegungsmittels 20 in Form eines Automobils. Das Automobil verfügt hierbei über einen ersten, zweiten und einen dritten Ultraschallsensor 10a, 10b, 10c.

**Patentansprüche**

1.　Verfahren zum Betreiben eines Ultraschallsensors (10, 10a, 10b, 10c) umfassend die Schritte:

• Senden (100) eines Ultraschallsignals (9), wobei während des Sendens eine Ultraschallfrequenz (f) des Ultraschallsignals (9) variiert wird,

wobei die Ultraschallfrequenz (f) mindestens von einem ersten Wert (1) über einen zweiten Wert (2) auf einen dritten Wert (3) variiert und gesendet wird, und

während des Variierens zwischen dem ersten und dem zweiten Wert (1, 2) und zwischen dem zweiten und dem dritten Wert (2, 3) eine Eigenfrequenz (7) und/oder eine Zwischenfrequenz des Ultraschallsensors (10, 10a, 10b, 10 c) je einmal durchlaufen wird,

und die Eigenfrequenz (7) und/oder die Zwischenfrequenz jeweils zwischen dem ersten Wert (1) und dem zweiten Wert (2) sowie dem zweiten Wert (2) und dem dritten Wert (3) liegt;

• Empfangen (200) eines Echos (11) des ausgesendeten Ultraschallsignals (9); und

• Ermitteln (400) einer Ultraschallfrequenzverschiebung in Abhängigkeit einer zeitlichen Differenz von Signalanteilen des Ultraschallsignals (9) mit Eigenfrequenz (7) und/oder mit der Zwischenfrequenz des Ultraschallsignals (9) und einer zeitlichen Differenz von Signalanteilen des Echos (11) mit Eigenfrequenz (7) und/oder mit der Zwischenfrequenz des Echos (11).

2. Verfahren nach Anspruch 1 ferner umfassend den Schritt eines Ermittelns (500) einer Entfernung und/oder einer Relativgeschwindigkeit und/oder eines Winkels, aus welchem das Echo (11) bezüglich einer Fortbewegungsmittellängsachse stammt, in Abhängigkeit der Ultraschallfrequenzverschiebung.

3. Verfahren nach Anspruch 1 oder 2, wobei der erste Wert (1) der Ultraschallfrequenz (f) des Ultraschallsignals (9) und der dritte Wert (3) der Ultraschallfrequenz (f) des Ultraschallsignals (9) identisch sind.

4. Verfahren nach Anspruch 1 oder 2, wobei der erste Wert (1) der Ultraschallfrequenz (f) des Ultraschallsignals (9) und der dritte Wert (3) der Ultraschallfrequenz (f) des Ultraschallsignals (9) einen Maximalwert der Ultraschallfrequenz (f) repräsentieren.

5. Verfahren nach Anspruch 1 oder 3, wobei der erste und der dritte Wert (1, 3) einen Minimalwert der Ultraschallfrequenz (f) des Ultraschallsignals (9) repräsentieren.

6. Verfahren nach einem der vorstehenden Ansprüche, wobei das Ermitteln der Ultraschallfrequenzverschiebung durch einen Vergleich der zeitlichen Differenz von Signalanteilen mit Eigenfrequenz (7) und/oder von Signalanteilen mit der Zwischenfrequenz innerhalb des Ultraschallsignals (9) mit der zeitlichen Differenz von Signalanteilen mit Eigenfrequenz (7) und/oder von Signalanteilen mit der Zwischenfrequenz innerhalb des Echos (11) erfolgt.

7. Verfahren nach einem der vorstehenden Ansprüche, wobei das Variieren der Ultraschallfrequenz (f) während des Sendens (100) des Ultraschallsignals (9) mindestens einmal wiederholt wird.

8. Verfahren nach Anspruch 7, ferner umfassend den Schritt eines Filterns (400) eines Echos (11) basierend auf der Wiederholung des Variierens.

9. Verfahren nach Anspruch 7 oder 8, wobei ein Verlauf eines Variierens der Ultraschallfrequenz (f) des Ultraschallsignals (9) über eine Zeit (t) ein Sägezahnmuster und/oder einer Sinuskurve und/oder einer Kombination aus Tangens- und/oder Cotangensfunktionen und/oder einer Funktion dritter Ordnung aufweist.

10. Ultraschallsensor (10, 10a, 10b, 10c), welcher eingerichtet ist, ein Verfahren nach einem der Ansprüche 1 bis 9 durchzuführen.

11. Fortbewegungsmittel (20) umfassend einen Ultraschallsensor (10, 10a, 10b, 10c) nach Anspruch 10.

## Fig. 1

## Fig. 2

# Fig. 3

# Fig. 4

# Fig. 5

# Fig. 6

Europäisches
Patentamt

European
Patent Office

Office européen
des brevets

## EUROPÄISCHER RECHERCHENBERICHT

**Nummer der Anmeldung**

EP 19 18 3586

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/074785 A1 (BOSCH GMBH ROBERT [DE]) 28. Mai 2015 (2015-05-28) * Seite 2, Zeile 31 - Seite 6, Zeile 14 * * Seite 7, Zeile 12 - Seite 19, Zeile 10 * * Abbildungen 1-7 * ----- | 1-11 | INV. G01S15/93 G01S15/10 G01S15/34 G01S15/58 |
| A | EP 3 324 207 A1 (BOSCH GMBH ROBERT [DE]) 23. Mai 2018 (2018-05-23) * Absätze [0003] - [0018], [0020] - [0044] * * Abbildungen 1-3 * ----- | 1-11 | |
| A | DE 38 06 847 A1 (BOSCH GMBH ROBERT [DE]) 14. September 1989 (1989-09-14) * Spalten 2-6 * * Abbildungen 1-4 * ----- | 1-11 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 21. November 2019 | Kruck, Peter |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 3586

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2019

| Im Recherchenbericht angeführtes Patentdokument | Datum der Veröffentlichung | Mitglied(er) der Patentfamilie | Datum der Veröffentlichung |
|---|---|---|---|
| WO 2015074785 A1 | 28-05-2015 | CN 105745556 A<br>DE 102013223701 A1<br>EP 3071989 A1<br>WO 2015074785 A1 | 06-07-2016<br>21-05-2015<br>28-09-2016<br>28-05-2015 |
| EP 3324207 A1 | 23-05-2018 | DE 102016222810 A1<br>EP 3324207 A1 | 24-05-2018<br>23-05-2018 |
| DE 3806847 A1 | 14-09-1989 | DE 3806847 A1<br>IT 1228892 B | 14-09-1989<br>09-07-1991 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009029465 A1
- DE 102004005421 A1